(19) Europäisches Patentamt
European Patent Office
Office européen des brevets

(11) Veröffentlichungsnummer: **0 127 842**
**B1**

(12) # EUROPÄISCHE PATENTSCHRIFT

(45) Veröffentlichungstag der Patentschrift: **02.07.86**

(21) Anmeldenummer: **84105857.1**

(22) Anmeldetag: **23.05.84**

(51) Int. Cl.⁴: **C 07 C 69/82**, C 07 C 69/88, C 07 C 69/44, C 07 C 69/34, C 07 C 69/80, C 07 C 67/10, C 08 G 63/64, C 08 L 67/02

(54) **Diphenolmonoester von Carbonsäuren, ein Verfahren zu ihrer Herstellung, ihre Verwendung zur Herstellung von Polyestercarbonaten, die erfindungsgemäss erhältlichen Polyestercarbonate sowie flammwidrige Formmassen enthaltend diese Polyestercarbonate.**

(30) Priorität: **04.06.83 DE 3320260**

(43) Veröffentlichungstag der Anmeldung: **12.12.84 Patentblatt 84/50**

(45) Bekanntmachung des Hinweises auf die Patenterteilung: **02.07.86 Patentblatt 86/27**

(84) Benannte Vertragsstaaten: **DE FR GB IT NL**

(56) Entgegenhaltungen: **DE-B-1 260 479**

(73) Patentinhaber: **BAYER AG, Konzernverwaltung RP Patentabteilung, D-5090 Leverkusen 1 Bayerwerk (DE)**

(72) Erfinder: **Schreckenberg, Manfred, Dr., Bärenstrasse 14, D-4150 Krefeld (DE)**
Erfinder: **Dhein, Rolf, Dr., Deswatinesstrasse 30, D-4150 Krefeld 1 (DE)**
Erfinder: **Rudolph, Hans, Prof. Dr., Haydnstrasse 9, D-4150 Krefeld 1 (DE)**
Erfinder: **Nouvertné, Werner, Dr., Scheiblerstrasse 95, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 127 842 B1

LIBER, STOCKHOLM 1986

## Beschreibung

Gegenstand der vorliegenden Erfindung ist ein Verfahren zur Herstellung von Diphenolmonoestern von Carbonsäuren, das dadurch gekennzeichnet ist, daß Carbonsäuren mit hochmolekularen Polycarbonaten unter Verwendung von Katalysatoren bei Temperaturen zwischen 150°C und 350°C unter Abspaltung von $CO_2$ zur Reaktion gebracht werden, wobei zur Herstellung der Diphenolmonoester pro Carbonsäuregruppe der eingesetzten Carbonsäure ein Diphenolpolycarbonat-Äquivalent eingesetzt wird.

Die Reaktion stellt sich am Beispiel der Terephthalsäure und des Bisphenol-A-Polycarbonats wie folgt dar:

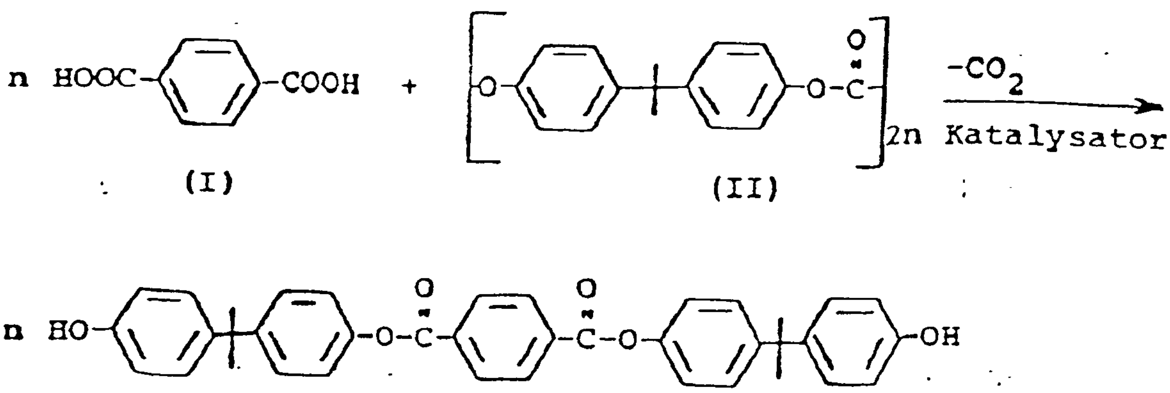


(I) (II)

(III)

Gegenstand der vorliegenden Erfindung sind außerdem die nach dem erfindungsgemäßen Verfahren erhältlichen Diphenolmonoester von Carbonsäuren, insbesondere von Monocarbonsäuren, Dicarbonsäuren, Tricarbonsäuren und Tetracarbonsäuren, also Monocarbonsäure-(diphenol)-monoester, Dicarbonsäure-bis-(diphenol)-monoester, Tricarbonsäuretri-(diphenol)-monoester und Tetracarbonsäure-tetrakis(diphenol)-monoester.

Ein weiterer Gegenstand der vorliegenden Erfindung ist die Verwendung der erfindungsgemäßen Diphenolmonoester zur Herstellung von Polyestercarbonaten nach dem Phasengrenzflächenverfahren oder nach dem Pyridinverfahren.

Ein weiterer Gegenstand der vorliegenden Erfindung sind die nach dem erfindungsgemäßen Verfahren erhältlichen Polyestercarbonate sowie flammwidrige Formmassen enthaltend die erfindungsgemäß erhältlichen Polyestercarbonate.

Gemäß US-PS 4 129 594 werden aromatische Dicarbonsäurechloride hergestellt, die zur Herstellung von aromatischen oligomeren und polymeren Bisphenolestern verwendet werden, wobei beispielsweise der Fall des einfachsten Terephthalsäure-bis-Bisphenol-A-Esters einbezogen ist. Die Polyester können durch Reaktion mit $COCl_2$ zu Polyestercarbonaten weiter umgesetzt werden. Eine Isolierung der speziellen Bis-bisphenol-A-Ester ist bei dieser Herstellungsmethode nicht möglich, vielmehr erhält man jeweils ein Gemisch von Bisphenolestern mit verschiedenstem Polymerisationsgrad, was zur Folge hat, daß die aus diesen Gemischen mit $COCl_2$ erhaltenen Polyesterpolycarbonate einen gezielten Segmentaufbau nicht besitzen.

Entsprechendes gilt für die DE-OS 3 026 937.

Ein anderer Syntheseweg für Polyestercarbonate geht von der Verwendung von fertigem Polycarbonat aus (siehe beispielsweise US-PS 3 998 908, GB-PS 954 500 und GB-PS 898 775). Bei diesem Schmelzverfahren können die Polycarbonate teils abgebaut werden (US-PS 3 988 908), während sie mit den Endgruppen der Polyester zur Reaktion gebracht werden. Der vollständige Abbau der Polycarbonate unter Abreaktion der COOH-Gruppen der Polyester ist jedoch hierbei weder beabsichtigt, noch dürfte er defacto erfolgen (siehe beispielsweise US-PS 3 998 908, Spalte 4, Zeilen 47-54 und Spalte 2, Zeilen 56-61 und Spalte 6, Zeilen 8-46).

Bei Herstellung von verzweigten Polycarbonaten werden ebenfalls carbonsäurehaltige Verzweigungsmittel eingebaut (siehe GB-PS 1 159 924, US-PS 3 816 373 und US-PS 4 001 184). Hierbei werden jedoch ebenfalls keine monomeren Ester-trisphenole bzw. Ester-tetraphenole etc. erhalten.

Gemäß DE-PS 2 254 918 (Le A 14 711) werden phenolische OH-Gruppen-haltige Orthoester hergestellt und als Verzweigungsmittel für thermoplastische Polycarbonate verwendet. Die Herstellung der Orthoester erfolgt durch Umesterung von Orthoacrylestern mit Diphenolen, also nach einem anderen Verfahren, als dem der vorliegenden Erfindung.

Gemäß DE-OS 2 714 544 werden Bisphenol-A-Terephthalat-Carbonat-Copolymere und ihre Herstellung aus

Bisphenol-A, Terephthaloylchlorid, Phenolen und Phosgen beschrieben. Die Polyestercarbonate des regelmäßigen Strukturaufbaus gemäß vorliegender Erfindung werden jedoch unseres Erachtens nach dem Verfahren dieser Lit.-Stelle nicht erzielt.

Gemäß EU-PS 2218 (Le A 18 544) werden aromatische Polyester in Gegenwart von aromatischen Polycarbonaten nach einem Umesterungsverfahren unter Mitverwendung von Bisphenolen und Diarylestern von aromatischen Dicarbonsäuren hergestellt. Auch dieses Verfahren liefert nicht die Polyestercarbonate der vorliegenden Erfindung mit dem regelmäßigen Strukturaufbau.

Die DE-OS 26 36 783 (Le A 16 689) und die DE-OS 27 02 626 (Le A 17 356) beschreiben den direkten Einbau von Carbonsäuren ab eines bestimmten Molekulargewichts zusammen mit Diphenolen und phosgen nach dem Phasengrenzflächenverfahren zur Herstellung von Polyestercarbonaten. Wiederum ist nicht zu erwarten, daß die Polyestercarbonate der vorliegenden Erfindung mit dem regelmäßigen Strukturaufbau erhalten werden.

Bisphenolpolycarbonat-Äquivalent im Sinne der vorliegenden Erfindung ist die Struktureinheit der folgenden Formel

$$[-O-Z-O-\underset{\underset{O}{\parallel}}{C}-],$$

wobei HO-Z-OH ein estergruppen freies Diphenol ist.

Erfindungsgemäß geeignete Katalysatoren für die Herstellung der Esterdiphenole sind beispielsweise 5-gliedrige, heterocyclische Verbindungen wie Imidazol, Pyrazol, Indazol, 1,2,3-Triazol, 1,2,4-Triazol, Benzimidazol, Benztriazol, 3-Amino-1,2,4-triazol, 3-Amino-1,2,4-triazol-carbonsäure-(5), Tetrazol, 5-Amino-tetrazol und Amidine oder Salze tertiärer organischer Amine, Tri- und Tetralkylammoniumhydroxide oder Alkalioxide, -hydroxide, -alkoholate, -carbonate, -sulfate oder -phosphonate.

Der Katalysator wird in Mengen zwischen 0,001 und 10 Gew.-%, vorzugsweise 0,01 bis 1 Gew.-%, bezogen auf das Gesamtgewicht des eingesetzten Reaktionsgemisches, verwendet.

Die bevorzugten Reaktionstemperaturen liegen zwischen 180°C und 250°C.

Die erfindungsgemäße Herstellung der Esterphenolate erfolgt vorzugsweise in Abwesenheit Von Lösungsmitteln für die Reaktanden, also in Substanz. Es können aber auch Lösungsmittel für die Carbonsäuren und/oder für das Polycarbonat mit verwendet werden wie Chlorbenzol, Toluol, Xylol, Benzol oder chlorierte Kohlenwasserstoffe.

Die Reaktionszeit zur Herstellung der Esterphenole beträgt in Abhängigkeit von der Reaktionstemperatur sowie Art und Menge des Katalysators zwischen 2 und 60 Stunden.

Das bei der Reaktion entstehende Phenol, das aus den Kettenbegrenzern der eingesetzten Polycarbonate resultiert, wird durch anschließende Vakuumdestillation entfernt.

Erfindungsgemäß einsetzbare Carbonsäuren sind Monocarbonsäuren, Dicarbonsäuren, Tricarbonsäuren, Tetracarbonsäuren sowie beliebig höhere Carbonsäuren. Die erfindungsgemäß einsetzbaren Carbonsäuren können aromatische, aliphatische, cycloaliphatische, araliphatische oder heterocyclische Carbonsäuren sein. Sie können allein oder im Gemisch miteinander eingesetzt werden. Erfindungsgemäß einsetzbare Carbonsäuren sind insbesondere solche der Formel (IV)

$A-(COOH)_p$ (IV)

worin "A" ein "P"-wertiger, gesättigter oder ungesättigter aliphatischer Rest mit vorzugsweise 1 bis 20 C-Atomen, ein cycloaliphatischer Rest mit vorzugsweise 5 bis 6 C-Atomen, ein araliphatischer Rest mit vorzugsweise 7-15 C-Atomen, oder ein die Heteroatome N, O und/oder S enthaltender heterocyclischer Rest mit 3 bis 12 C-Atomen und "P" eine ganze Zahl von 1 bis 4, besonders bevorzugt 2 oder 3 ist. Im Falle von $p = 2$, kann -A- auch eine Einfachbindung sein.

Aromatische Reste A im Sinne dieser Definition sind beispielsweise auch solche der folgenden Struktur

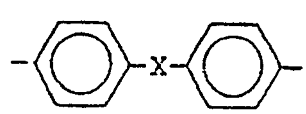

worin

X $-O-$, $-S-$, $-SO_2-$, $-CO-$, $-CH_2-$ oder $-\underset{CH_3}{\overset{CH_3}{C}}-$ ist.

Carbonsäuren der Formel (IV) sind beispielsweise Oxalsäure, Malonsäure, Bernsteinsäure, Glutarsäure, Adipin-, Trimethyladipin-, Azelain-, Sebacinsäure, Decandicarbonsäure, Dodecandicarbonsäure, hydrierte dimere und hydrierte trimere Fettsäuren (aus z.B. Ölsäure oder Tallölsäure), Fumarsäure, Maleinsäure, Hexahydroterephthalsäure, Phthalsäure, Isophthalsäure, Terephthalsäure, Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Diphenyl-sulfon-4,4'-dicarbonsäure, Butantetracarbonsäure, Ethylentetracarbonsäure, Pyromellitsäure, Benzol-1,2,3,4-tetracarbonsäure, Benzol-1,2,3,5-tetracarbonsäure sowie Verbindungen der folgenden Formeln

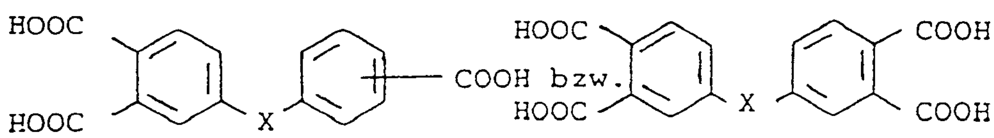
bzw.

worin

X den Resten -O-, -S-, $-SO_2-$, -CO-, $-CH_2-$ oder $CH_3-\overset{|}{\underset{|}{C}}-CH_3$ entspricht.

Erfindungsgemäß einsetzbare Carbonsäuren sind insbesondere auch phenolische OH-Gruppen enthaltende Carbonsäuren und zwar insbesondere solche der Formel (V)

$(HOOC)-_sA-(OH)_t$ (V)

worin "A" einer der für Formel (IV) genannten aromatischen Reste ist sowie "s" und "t" unabhängig voneinander eine ganze Zahl von 1 bis 3, vorzugsweise 1 oder 2 sind. Phenolische OH-Gruppen enthaltende Carbonsäuren der Formel (V) sind beispielsweise 2-, 3-, 4-Hydroxybenzoesäure, (α-Hydroxybenzol)essigsäure, Hydroxynaphthalincarbonsäuren, Hydroxy-diphenyl-essigsäure, Hydroxyanthracencarbonsäuren, 2,4-Dihydroxybenzoesäure, 3,5-Dihydroxybenzoesäure, 3,5-Dihydroxy-2-naphthalin-carbonsäure, 4,4'-Dihydroxy-(1,1'-biphenyl) -2-carbonsäure, 4,4'-Bis-(4-hydroxyphenyl)-pentansäure, 3,4,5-Trihydroxybenzoesäure, 4-Hydroxy-1,3-benzol-dicarbon-säure, 4-Hydroxy-1,2-benzoldicarbonsäure, 4,6-Dihydroxy-1,3-benzoldicarbonsäure, 2,5-Dihydroxy-1,4-benzoldi-carbonsäure und 3,3'-Methylenbis-(6-hydroxy)-5-methyl-benzoesäure.

Erfindungsgemäß einsetzbare Dicarbonsäuren sind auch carboxylgruppenhaltige Ester der Formel (VI)

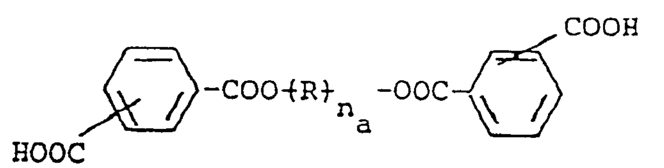
(VI)

oder der Formel (VII)

$$HOOC\text{-}(CH_2)_{n_b}\text{-}COO\text{-}(R)_{n_a}\text{-}OOC\text{-}(CH_2)_{n_c}\text{-}COOH \quad (VII)$$

worin

R ein zweiwertiger aromatischer Rest mit $C_6$-$C_{14}$, ein araliphatischer Rest mit $C_7$-$C_{20}$, ein aliphatischer Rest mit $C_2$-$C_{20}$ oder ein cycloaliphatischer Rest mit $C_5$-$C_6$ ist, der aromatische ($C_6$-$C_{12}$), cycloaliphatische ($C_4$-$C_{12}$) oder heterocyclische ($C_3$-$C_{12}$) Ringe enthalten kann und/oder Ether-, Keto-, Carbonsäureester- oder Sulfonbrücken enthalten kann und der gegebenenfalls durch Halogen, Nitro- oder Alkoxygruppen mit $C_1$-$C_{20}$ Alkylresten substituiert sein kann. Der Index $n_a$ steht für eine ganze Zahl von 1-20, die Indices $n_b$ und $n_c$ können gleich oder verschieden sein und bedeuten eine ganze Zahl von 0-20.

Mögliche Beispiele für (R) sind:

$-CH_2-CH_2-$, $-C_5H_{10}-$, 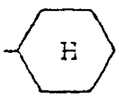 -, 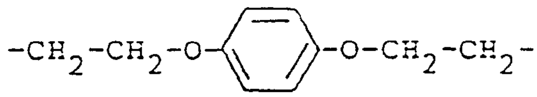 ,

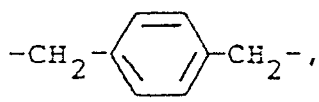 , $-(CH_2)_2-O-(CH_2)_2-$, 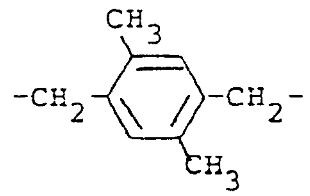 ,

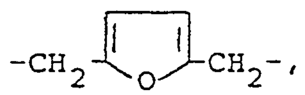 , 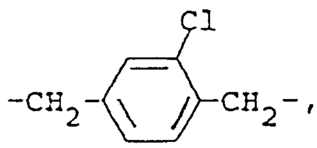 , $-CH_2-CH=CH-CH_2-$ und

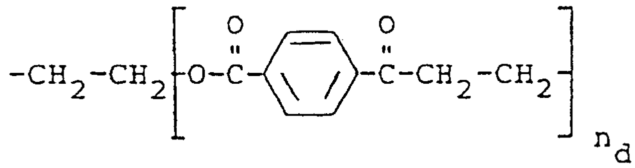 mit $n_d$ = 1-7.

Erfindungsgemäß einsetzbare Monocarbonsäuren der Formel (IV) sind Buttersäure, Isobuttersäure, Pentansäure, 2-und 3-Methylpentansäuren, 2,2-Dimethylpropansäure, 2-Ethylbutansäure, 2-Ethylhexansäure, Kokusfettsäure, Dodecansäure, Tetradecansäure, Hexadecansäure und Stearinsäure, Cyclohexancarbonsäure, 1- und 3-Cyclohexen-1-carbonsäure, Benzoesäure, Methyl-benzoesäure, Phenylessigsäure, 4-Methylphenylessigsäure, Dimethylbenzoesäure, 3-Phenyl-2-propensäure, 1-Naphthalincarbonsäure und 1,1-Biphenyl-4-carbonsäure.

Erfindungsgemäß geeignete hochmolekulare Polycarbonate sind im Prinzip alle, die Molekulargewichte $\bar{M}w$ (Gewichtsmittel) zwischen 10.000 und 200.000 (gemessen durch die Viskosität in $CH_2Cl_2$ bei 25°C und einer Konzentration von 0,5 Gew.-% oder durch die Lichtstreumethode) und aus Struktureinheiten der

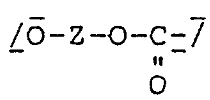 bestehen,

wobei HO-Z-OH ein estergruppenfreies Diphenol ist und wobei -Z- ein estergruppenfreier aromatischer Rest mit vorzugsweise 6 bis 30 C-Atomen ist. Die geeigneten Polycarbonate können sowohl ohne oder mit Kettenabbrechern hergestellt sein.

Geeignete Diphenole HO-Z-OH sind insbesondere solche der Formel (VIII)

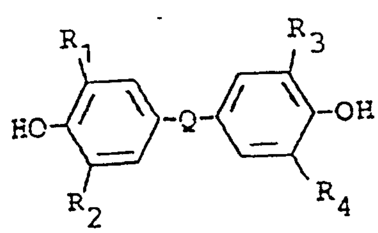 (VIII)

worin

Q eine Einfachbindung, $-CH_2-$, $CH_3-C-CH_3$, 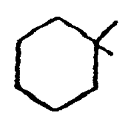 , -O-,

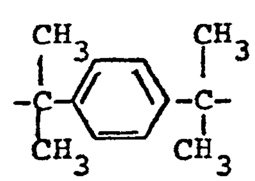 ,

-S- oder -$SO_2$- bedeutet und $R_1$ bis $R_4$ gleich oder verschieden sind und H, Halogen wie Chlor oder Brom, oder $CH_3$ bedeuten.

Geeignete Diphenole HO-Z-OH sind beispielsweise
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α, α'-Bis-(hydroxyphenyl)-diisopropylbenzol sowie deren kernalkylierte und kernhalogenierte Verbindungen. Diese und weitere geeignete Diphenole sind beispielsweise in den US-Patentschriften 3 028 365, 3 275 601, 3 148 172, 3 062 781 und 2 999 846, in den deutschen Offenlegungsschriften 1 570 703, 2 063 050, 2 063 052, der französischen Patentschrift 1 561 518 und in der Monographie "H.Schnell, Chemistry and Physics of Polycarbonates, Interscience Publishers, New York, 1964" beschrieben.

Geeignete Diphenole sind beispielsweise: 4,4-Dihydroxy-diphenyl, 2,2-Bis-(4-hydroxyphenyl)-propan, Bis-(4-hydroxyphenyl)-methan, 2,4-Bis-(4-hydroxyphenyl)-2-methylbutan, α,α-Bis-(4-hydroxyphenyl)-p-diisopropylbenzol, 2,2-Bis-(3-chlor-4-hydroxyphenyl)-propan, Bis(hydroxyphenyl)-sulfid und 2,2-Bis-(3,5-dimethyl-4-hydroxyphenyl)-propan.

Die für das erfindungsgemäße Verfahren wichtigsten Polycarbonate sind Homopolycarbonate und Copolycarbonate mit $\bar{M}_w$ zwischen 10.000 und 200.000, welche aus 2,2-Bis-(4-hydroxy-phenyl)-propan, Bis-(4-hydroxyphenyl)-methan, 1,1-Bis-(4-hydroxyphenyl)-cyclohexan, 4,4-Dihydroxydiphenyl, 2,2-Bis-(3,5-dichlor-4-hydroxyphenyl)-propan, 2,2-Bis-(3,5-dimethyl-4-hydroxyphenyl)-propan, Bis-(3,5-dimethyl-4-hydroxyphenyl)-methan, Bis-(4-hydroxyphenyl)-thioether und 2,2-Bis-(3,5-dibromphenyl)-propan hergestellt sind, unter Verwendung von Phenolen oder Alkylphenolen als Kettenabbrecher.

Erfindungsgemäß können sowohl ein als auch mehrere Polycarbonate eingesetzt werden.

Die erfindungsgemäßen Diphenolmonoester von Carbonsäuren sind insbesondere solche der Formel (IVa)

$$A\left(CO-O-Z-OH\right)_p \qquad (IVa)$$

worin "A" und "p" die für Formel (IV) genannte Bedeutung haben und -Z- der bereits definierte estergruppenfreie aromatische Rest mit vorzugsweise 6 bis 30 C-Atomen ist. Die erfindungsgemäßen Diphenolmonoester von Carbonsäuren sind insbesondere auch solche der Formel (Va)

$$\left(HO-Z-O-\underset{\underset{O}{\|}}{C}\right)_s A\left(OH\right)_t \qquad (Va)$$

worin "A", "s" und "t" die für Formel (V) genannte Bedeutung haben und -Z- die vorstehend für (IVa) genannte Bedeutung hat.

Erfindungsgemäße Dicarbonsäure-bis-(diphenol)-monoester sind auch solche der Formeln (VIa) und (VIIa)

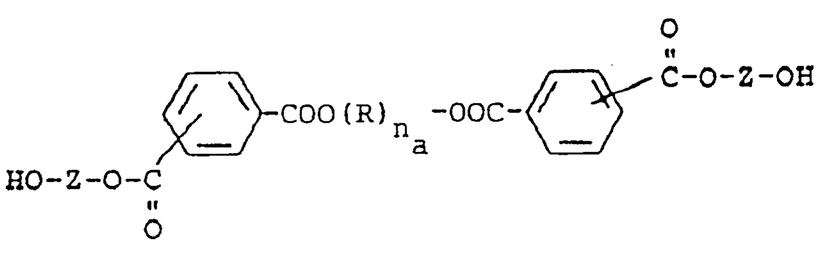

(VIa)

$$HO-Z-O-\underset{\underset{O}{\|}}{C}-(CH_2)_{n_b}-\underset{\underset{O}{\|}}{C}-O(R)_{n_a}-O-\underset{\underset{O}{\|}}{C}-(CH_2)_{n_c}-\underset{\underset{O}{\|}}{C}-O-Z-OH \qquad (VIIa)$$

worin R, $n_a$, $n_b$ und $n_c$ die für die Carbonsäuren der Formeln (VI) und (VII) genannte Bedeutung haben und -Z- die vorstehend für (IVa) genannte Bedeutung hat.

Erfindungsgemäße Dicarbonsäure-bis-(diphenol)-monoester sind beispielsweise die der folgenden Formeln ($IVa_1$) bis ($IVa_8$), worin "A" die für Formel (IV) genannte Bedeutung hat.

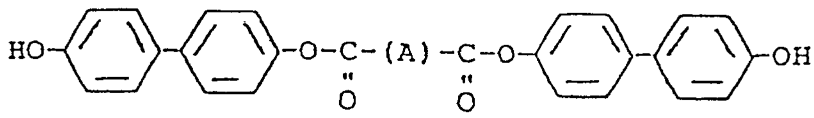

($IVa_1$)

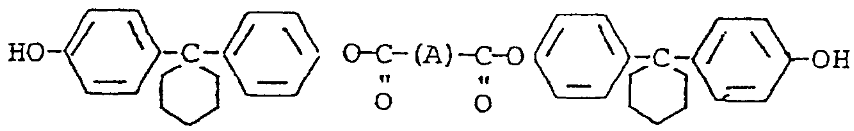

($IVa_2$)

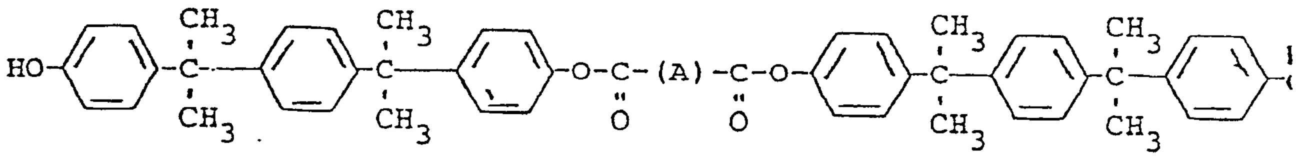

($IVa_3$)

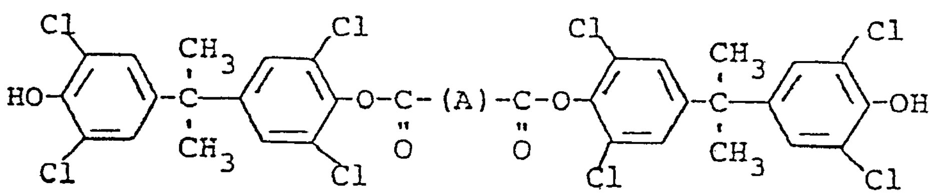

($IVa_4$)

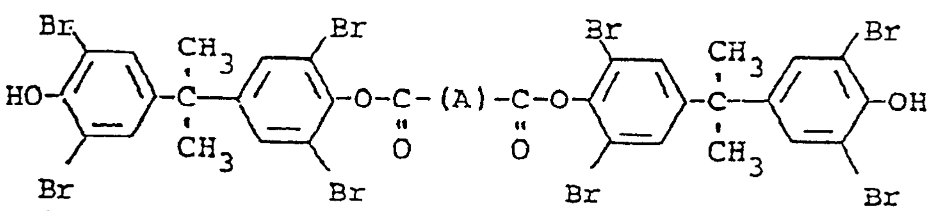

($IVa_5$)

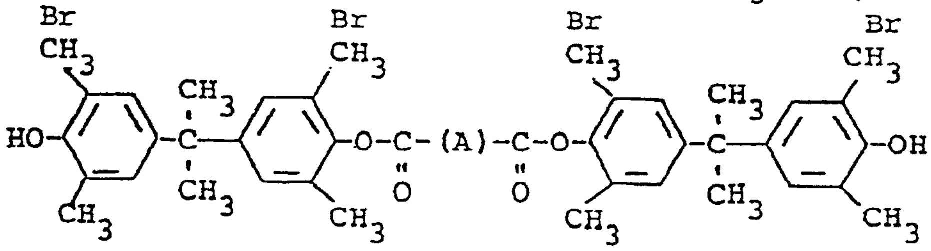

($IVa_6$)

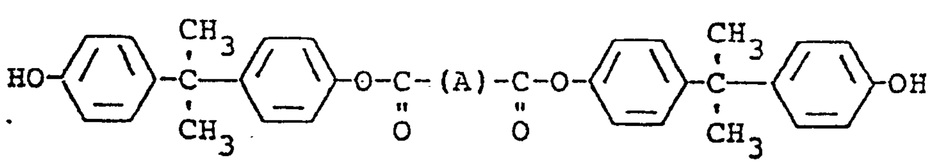

($IVa_7$)

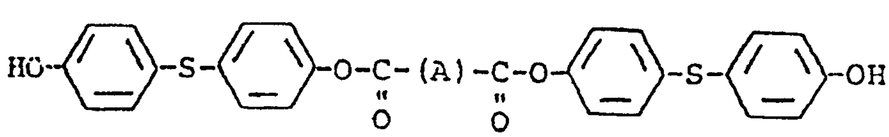

($IVa_8$)

Beispiele für Diphenolmonoester von Carbonsäuren der Formeln (IVa), (Va), (VIa) und (VIIa) sind die folgenden

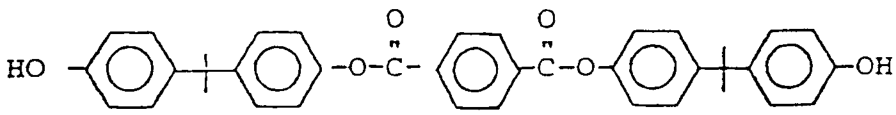 (IV a 9) = (III)

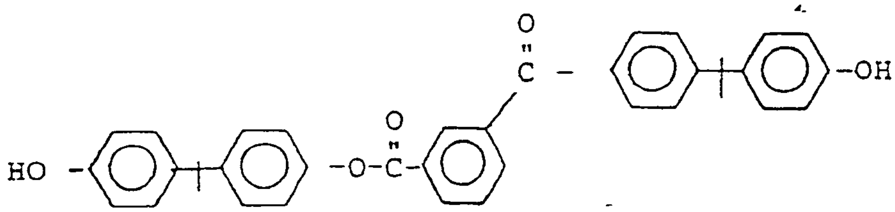 (IV a 10)

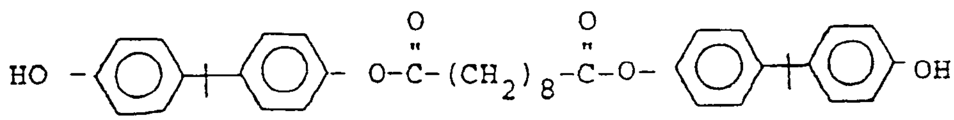 (IV a 11)

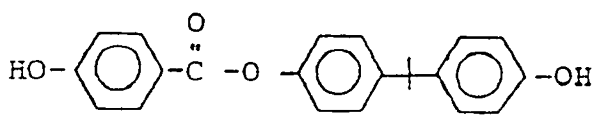 (Va 1)

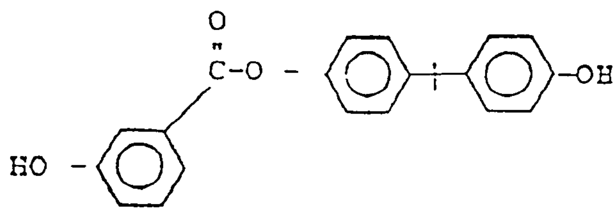 (Va 2)

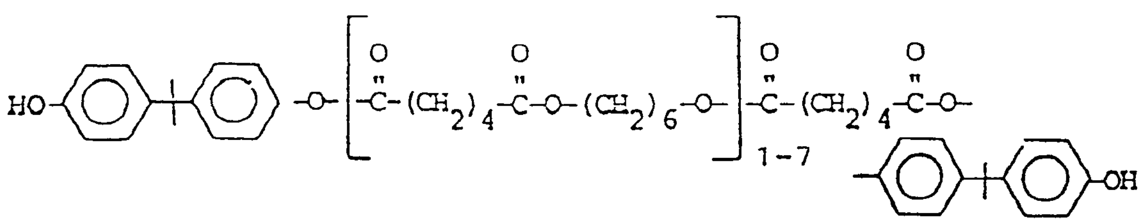 (VIa1)

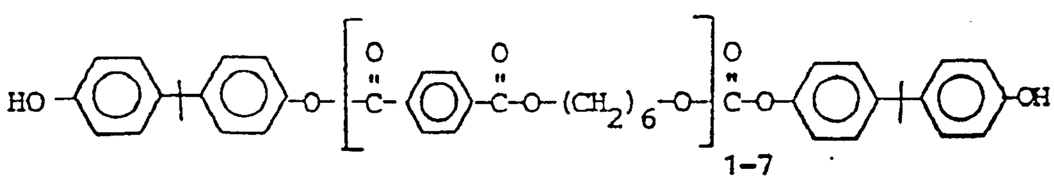 (VII a 1)

Beispiele für Diphenolmonoester von Monocarbonsäuren der Formel (IVa), worin p = 1 ist, sind die folgenden

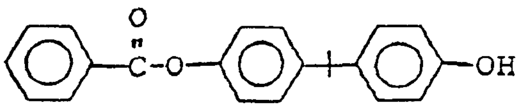

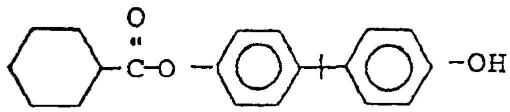

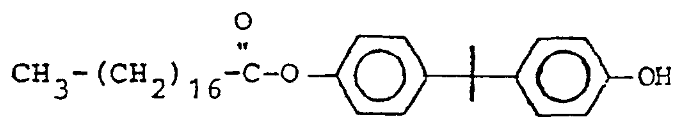

Die erfindungsgemäßen Diphenolmonoester von Carbonsäuren können zur Herstellung von Polyestercarbonaten nach dem für die Polycarbonatsynthese bekannten Zweiphasengrenzflächenverfahren eingesetzt werden, wobei man durch die Wahl definierter Mengen an definierten Ausgangsstoffen Polyestercarbonate eines jeweils bestimmten gewünschten und regelmäßigen Aufbaus erhält.

Sofern es Diphenolmonoester mit zwei phenolischen OH-Gruppen betrifft, also Dicarbonsäure-bis-(diphenol)monoester oder Monohydroxyarylmonocarbonsäure-(diphenol)-monoester, so sind sie als lineare Kettenbausteine verwendbar; Diphenolmonoester von Monocarbonsäuren mit einer phenolischen OH-Gruppe dienen als Kettenbegrenzer und Diphenolmonoester von Carbonsäuren mit insgesamt drei oder mehr als drei phenolischen OH-Gruppen dienen als Kettenverzweiger.

Gegenstand der vorliegenden Erfindung ist somit die Herstellung von Polyestercarbonaten aus Diphenolen, Phosgen, gegebenenfalls Kettenabbrechern in den bekannten Mengen und gegebenenfalls Verzweigern in den bekannten Mengen nach dem bekannten Zweiphasengrenzflächenverfahren bei pH-Werten zwischen 9 und 14, bei Temperaturen zwischen 0°C und 80°C, vorzugsweise 15°C und 40°C unter Verwendung der üblichen organischen Lösungsmittel und unter Verwendung der üblichen Polykondensationskatalysatoren, das dadurch gekennzeichnet ist, daß als Diphenole die erfindungsgemäßen Diphenolmonoester von Carbonsäuren mit zwei phenolischen OH-Gruppen, gegebenenfalls in Kombination mit den estergruppenfreien Diphenolen HO-Z-OH, worin -Z- ein estergruppenfreier, aromatischer - zweibindiger - Rest ist, gegebenenfalls unter Mitverwendung von Monocarbonsäure-(diphenol)-monoestern mit einer phenolischen OH-Gruppe als Kettenabbrecher und gegebenenfalls unter Mitverwendung von Diphenolmonoester von Carbonsäuren mit drei oder mehr als drei phenolischen OH-Gruppen als Verzweiger eingesetzt werden, wobei die jeweils eingesetzten Diphenolmonoester von Carbonsäuren in der organischen Phase des Zweiphasengemisches vorab gelöst werden.

Gegenstand der vorliegenden Erfindung sind auch die nach diesem erfindungsgemäßen Verfahren erhältlichen Polyestercarbonate.

Das Molverhältnis von Diphenolmonoestern mit zwei phenolischen OH-Gruppen zu estergruppenfreien Diphenolen HO-Z-OH ist abhängig von dem Molekulargewicht der eingesetzten Diphenolester und liegt zwischen 1: 0,01 und 1: 300, vorzugsweise zwischen 1: 0,05 und 1: 150.

Neben oder anstelle der Monocarbonsäure-(diphenol)monoester mit einer phenolischen OH-Gruppe der vorliegenden Erfindung können die üblichen monofunktionellen Kettenabbrecher wie Phenol, Alkylphenole oder Halogenphenole verwendet werden; die Menge an monofunktionellem Kettenabbrecher beträgt bezogen auf den Einsatz von Diphenolmonoestern mit zwei phenolischen OH-Endgruppen und freien Diphenolen zwischen 0,1 und 20 Mol-%, vorzugsweise zwischen 1 und 5 Mol-%.

Neben oder anstelle der Diphenolmonoester von Carbonsäuren mit drei oder mehr als drei phenolischen OH-Gruppen der vorliegenden Erfindung können die üblichen dreifunktionellen oder mehr als dreifunktionellen Verzweiger, insbesondere die mit drei oder mehr als drei phenolischen OH-Gruppen verwendet werden.

Die Menge an jeweils insgesamt einzusetzenden Verzweigern beträgt zwischen 0,05 und 2 Mol-%, bezogen auf Mole Diphenole. Einige der bekannten Verzweiger sind beispielsweise Phloroglucin, 4,6-Dimethyl-2,4,6-tri-(4-hydroxyphenol)heptan, 1,3,5-Tri-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, Tetra-(4-hydroxyphenyl)-methan, 2-(4-Hydroxy-phenyl)-2-(2,4-dihydroxyphenyl)-propan und 1,4-Bis-[4,4'''-dihydroxytriphenyl-methyl]-benzol.

Von den für die erfindungsgemäße Herstellung der polyestercarbonate gegebenenfalls mitzuverwendenden

estergruppenfreien Diphenolen HO-Z-OH seien bevorzugt 2,2-Bis-(4-hydroxyphenyl)-propan, 2,2-Bis-(3,5-dichlor-4-hydroxyphenyl)-propan, 2,2-Bis-(3,5-dibrom-4-hydroxy-phenyl)-propan und 1,1-Bis-(4-hydroxyphenyl)-cyclohexan verwendet. Es können auch beliebige Mischungen dieser Diphenole eingesetzt werden.

Geeignete organische Lösungsmittel für das Zweiphasengrenzflächenverfahren sind die für die thermoplastischen Polycarbonate bekannten wie beispielsweise Methylenchlorid oder Chlorbenzol.

Geeignete Polykondensationskatalysatoren für das Zweiphasengrenzflächenverfahren sind beispielsweise die für die Polycarbonatsynthese bekannten tertiären aliphatischen Aminkatalysatoren wie Trimethylamin, Triethylamin, n-Tripropylamin, n-Tributylamin oder N-Ethylpiperidin; gegebenenfalls können auch die bekannten quartären Ammoniumsalze wie beispielsweise Tetrabutylammoniumbromid eingesetzt werden.

Für die Herstellung der wäßrig-alkalischen Phase eignen sich Lösungen von LiOH, NaOH, KOH, $Ca(OH)_2$ und/oder $Ba(OH)_2$ in Wasser.

Die Phosgenmenge beträgt pro Mol Diphenolmonoester mit zwei phenolischen OH-Gruppen und estergruppenfreien Diphenol zwischen 1 und 3 Mol, vorzugsweise zwischen 1,1 und 2 Mol.

Die Reaktionszeiten für die Polyestercarbonat-Herstellung liegen bezüglich der Phosgenierung zwischen 5 Minuten und 90 Minuten und für die Polykondensation nach Katalysatorzugabe zwischen 3 Minuten und 3 Stunden.

Das Zweiphasengrenzflächenverfahren kann zweckmäßig unter Mitverwendung von 0,1 bis 1 Gew.-%, bezogen auf Gesamtgewicht an difunktionellen Reaktionspartnern, an reduzierenden alkalischen Substanzen wie Natriumborhydrid oder Natriumsulfit durchgeführt werden.

Die Abtrennung und Reinigung der nach dem erfindungsgemäßen Zweiphasengrenzflächenverfahren erhaltenen organischen Lösungen der Polyestercarbonate erfolgt in der für thermoplastische Polycarbonate bekannten Weise.

Die Isolierung der hergestellten Polyestercarbonate aus den organischen Lösungen erfolgt in bekannter Weise beispielsweise durch Eindampfen der Lösung, wobei in der Endstufe des Eindampfens ein Ausdampfextruder benutzt wird. Andere Arten der Isolierung sind das Ausfällen durch Zusatz von Nichtlösern oder das unmittelbare Vergießen der eingeengten Lösungen zu Filmen.

Die Polyestercarbonate der vorliegenden Erfindung besitzen in der Regel relative Lösungsviskositäten von 1,18 bis 2,0, insbesondere von 1,2 bis 1,5 (gemessen in 0,5 g/100 ml Lösung in $CH_2Cl_2$ bei 25°C).

Die Polyestercarbonate der vorliegenden Erfindung werden durch Extrusion als einheitliches Granulat hergestellt und können durch Spritzgießen zu Formkörpern verarbeitet werden. Sie sind auch zur Herstellung von Folien und Überzügen geeignet.

Die Polyestercarbonate der vorliegenden Erfindung können während oder nach ihrer Herstellung in bekannter Weise mit den verschiedensten Additiven, Stabilisatoren, Flammschutzmitteln und Füllstoffen versehen werden, also mit Antioxidantien, UV-Stabilisatoren, Entformungsmitteln, organischen Halogenverbindungen, Alkalisulfonaten, Glasfasern, Glaskugeln, Bariumsulfat, $TiO_2$ und anderen für die thermoplastischen polycarbonate bekannten Zusätzen.

Die Polyestercarbonate der vorliegenden Erfindung zeigen insbesondere in Kombination mit den bekannten Flammschutzmitteln, also beispielsweise in Kombination mit Kaliumperfluorbutansulfonat und N-Methyltetrachlorphthalimid eine verbesserte Flammwidrigkeit.

Gegenstand der vorliegenden Erfindung sind somit auch Formmassen enthaltend die erfindungsgemäß erhältlichen Polyestercarbonate, Alkalisalze von Perfluoralkansulfonsäuren oder Arylsulfonsäuren in Mengen von 0,05-2 Gew.-% und gegebenenfalls N-Alkyltetrachlorphthalimide, Polyhalogendiphenyle, Polyhalogendiphenylether oder Oligocarbonate von Tetra-halogenbisphenol-A in Mengen von 0,3-5 Gew.-%, bezogen jeweils auf das Gesamtgewicht der Formmasse.

Die Polyestercarbonate der vorliegenden Erfindung können überall dort verwendet werden, wo bislang die thermoplastischen, aromatischen Polycarbonate eingesetzt werden, jedoch eine höhere Einfriertemperatur erwünscht ist, also im Bereich 150°C bis 175°C.

In den nachfolgenden Beispielen ist die relative Lösungsviskosität $\eta$ rel in Dichlormethan bei 25°C und einer Konzentration von 0,5 Gew.-% bestimmt worden.

I. Herstellung von Diphenolmonoestern von Carbonsäuren

I.1 Herstellung von Terephthalsäure-bis-[2,2-bis-(4-hydroxyphenyl)-propan]-monoester.

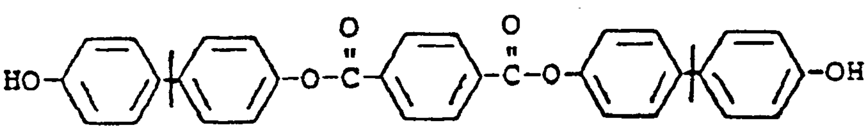

In einem Rührautoklaven werden 2490 g Terephthalsäure, 8010 g lineares Bisphenol-A-Polycarbonat (mit $\eta$ rel: 1,28 und mit 89 g eingebautem Phenol als Kettenabbrecher) und 25 g Imidazol vorgelegt. Unter Rühren und $N_2$-Atmosphäre wird diese Mischung innerhalb 2 h auf 220°C erhitzt. Man läßt 8 h bei dieser Temperatur rühren, danach wird 4 h bei 250°C erhitzt. Während dieser Zeit werden 705 l $CO_2$ abgespalten. Anschließend wird ein Vakuum von 1 Torr angelegt. Das glasartige, braun gefärbte Produkt hat folgende Kennzahlen:

SZ 0,9
OHZ 178 gefunden
OHZ 190 berechnet.

I.2 Herstellung von p-Hydroxybenzoesäure-[2,2-bis-(4-hydroxyphenyl)-propan]-monoester.

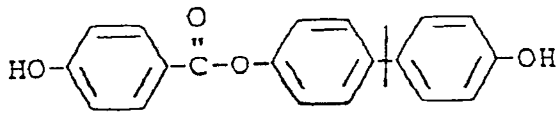

In einem Rührautoklaven werden 2071,8 g p-Hydroxybenzoesäure, 4005 g eines Bisphenol-A-Polycarbonats (mit $\eta$ rel: 1,28 und mit 44,5 g eingebautem Phenol als Kettenabbrecher) und 15 g Imidazol vorgelegt. Unter Rühren und $N_2$-Atmosphäre wird diese Mischung innerhalb 2 h auf 200°C erhitzt. Ab ca. 150°C tritt $CO_2$-Abspaltung ein. Man läßt die Reaktionsmischung noch 5 h bei dieser Temperatur rühren, bis ca. 330 l $CO_2$ abgespalten sind und die Säurezahl ca. 1,5 beträgt. Anschließend wird ein Vakuum von 1 Torr angelegt. Das glasartige, leicht gefärbte, transparente Produkt hat folgende Kennzahlen:

SZ 1
OHZ 298 gefunden
OHZ 321 berechnet.

I.3 Herstellung von Adipinsäure-bis-[2, 2-bis-(4-hydroxyphenyl)-propan]-monoester

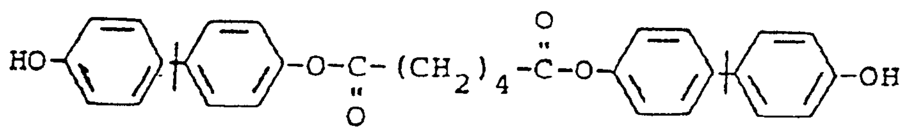

In einem Rührkolben werden 14,6 g Adipinsäure, 53,4 g Bisphenol-A-Polycarbonat (mit $\eta$ rel: 1,28 und mit 0,59 g eingebautem Phenol als Kettenabbrecher) und 0,6 g Imidazol vorgelegt. Unter Rühren wird diese Mischung innerhalb 30 Minuten auf 200°C erhitzt. Nach ca. 2 h ist die $CO_2$-Abspaltung beendet. Danach wird 1 h ein Vakuum von 20 Torr angelegt. Das glasartige, braun gefärbte produkt hat folgende Kennzahlen:

SZ 1
OHZ 190 gefunden
OHZ 197,6 berechnet.

I.4 Herstellung des Bis-[2,2-bis-(4-hydroxyphenyl)-propan]-monoesters der hydrierten Dimerfettsäure.

In einem Rührkolben werden 53,4 g Bisphenol-A-polycarbonat, (mit $\eta$ rel: 1,28 und mit 0,59 g eingebautem Phenol als Kettenabbrecher), 56 g hydrierte Dimerfettsäure $\bar{M}$n 560 (Empol 1010 der Unilever Emery) und 0,6 g Imidazol vorgelegt. Innerhalb 30 Minuten wird diese Mischung auf 200°C erhitzt. Nach 4 h ist die $CO_2$-Abspaltung beendet. Anschließend wird 1 h ein Vakuum von 20 Torr angelegt. Das bräunliche, harzartige Produkt besitzt folgende Kennzahlen:

SZ 0,5
OHZ 144 berechnet
OHZ 105 gefunden.

I.5 Herstellung von Sebacinsäure-bis-[2,2-bis-(4-hydroxyphenyl)-propan]-monoesters

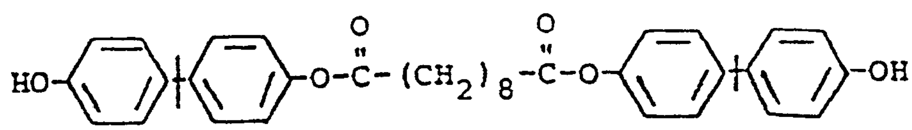

In einem Rührkolben werden 20,2 g Sebacinsäure, 53,4 g Bisphenol-A-Polycarbonat (mit $\eta$ rel: 1,28 und mit 0,59 g eingebautem Phenol als Kettenabbrecher) und 0,6 g Imidazol vorgelegt. Unter Rühren wird diese Mischung innerhalb 30 Minuten auf 200°C erhitzt. Nach ca. 2 h ist die $CO_2$-Abspaltung beendet. Anschließend wird 1 h ein Vakuum von 20 Torr angelegt.

Das bräunliche, leicht harzige Produkt besitzt folgende Kennzahlen:

SZ 0,5
OHZ 180 berechnet
OHZ 174 gefunden.

I.6 Herstellung des Bis-[2,2-bis-(4-hydroxyphenyl)-propan]-monoesters eines hydrierten Dimerfettsäurehexandiol-Polyesters.

In einem Rührkolben werden 120,2 g eines COOH-terminierten, hydrierten Dimerfettsäure-hexandiol-Polyesters ($\bar{M}_n$ = 1220; OH-Zahl = 92), 53,4 g Bisphenol-A-Polycarbonat, (mit $\eta$ rel: 1,28, und mit 0,59 g eingebautem Phenol als Kettenabbrecher) und 0,6 g Imidazol vorgelegt. Unter Rühren wird diese Mischung

innerhalb 30 Minuten auf 200°C erhitzt. Nach etwa 4 h ist die $CO_2$-Abspaltung beendet. Anschließend wird ein Vakuum von 20 Torr angelegt. Das bräunliche Öl hat folgende Kennzahlen:

SZ 0,5
OHZ 92 berechnet
OHZ 85 gefunden.

I.7 Herstellung eines Gemisches aus Terephthalsäure-bis-[2,2-bis-(4-hydroxyphenyl)-propan]-monoesters und Isophthalsäure-bis-[2,2-bis-(4-hydroxyphenyl)-propan]-monoesters im Molverhältnis 1:1.

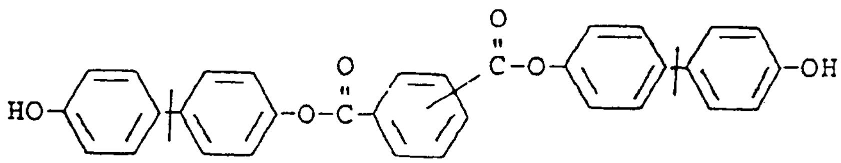

In einem Rührkolben werden 1,245 kg Terephthalsäure, 1,245 kg Isophthalsäure, 8,010 kg Bisphenol-A-polycarbonat, (mit η rel: 1,28 und mit 88,9 g eingebautem Phenol als Kettenabbrecher) und 7,5 g Imidazol vorgelegt. Unter Rühren und $N_2$-Atmosphäre wird diese Mischung innerhalb 2 Stunden auf 220°C erhitzt. Ab ca. 150°C tritt langsam die $CO_2$ -Abspaltung ein, die mit steigender Reaktionstemperatur stärker wird. Man läßt die Reaktionsmischung noch 11 h bei dieser Temperatur rühren, bis ca. 700 l $CO_2$ abgespalten sind und die Säurezahl 0,6 beträgt. Zur weiteren Vervollständigung der Reaktion und Abtrennung von freiem Phenol aus dem Reaktionsgemisch wird ein Vakuum von ca. 1 Torr angelegt. Es werden innerhalb 1 h bei ca. 1 Torr 380 g Phenol abdestilliert. Das glasartige, leicht braun gefärbte, transparente Produkt hat folgende Kennzahlen:

SZ 0,5
OHZ 186-187 gefunden
OHZ 190 berechnet.

I.8 Herstellung eines Gemisches gemäß Beispiel I.7 aber im Molverhältnis 3:1.

In einem Rührautoklaven werden 1245 g Terephthalsäure, 415 g Isophthalsäure, 5340,3 g Bisphenol-A-Polycarbonat, (mit η rel: 1,28 und mit 59,4 g eingebautem Phenol als Kettenabbrecher) und 15 g Imidazol vorgelegt. Unter Rühren und $N_2$-Atmosphäre wird diese Mischung innerhalb 2 h auf 200°C erhitzt. Ab ca. 150°C tritt langsam $CO_2$-Abspaltung ein. Die Reaktionsmischung wird noch 18 h bei dieser Temperatur gerührt, während gleichzeitig 470 l $CO_2$ abgespalten werden und die Säurezahl gegen Ende der Reaktion 0,9 beträgt. Danach wird innerhalb 1 h ein Vakuum von 1 Torr angelegt. Das glasartige, leicht braun gefärbte, transparente und spröde Produkt hat folgende Kennzahlen:

SZ 0,6
OHZ 185-187 gefunden
OHZ 190 berechnet.

I.9 Herstellung eines Gemisches gemäß Beispiel I.7, aber im Molverhältnis 9:1.

In einem Rührautoklaven werden 2241 g Terephthalsäure, 249 g Isophthalsäure, 8010 g Bisphenol-A-Polycarbonat, (mit η rel: 1,28 und mit 89 g eingebautem Phenol als Kettenabbrecher) und 25 g Imidazol vorgelegt. Unter Rühren und $N_2$-Atmosphäre wird diese Mischung innerhalb 2 h auf 220°C erhitzt. Die Reaktionsmischung wird noch 7 h bei dieser Temperatur gerührt, während gleichzeitig 702 l $CO_2$ abgespalten werden und die Säurezahl 0,8 beträgt. Danach wird an das glasartige, spröde und später kristallin werdende Produkt innerhalb 1 h ein Vakuum von 1 Torr bei 250°C angelegt. Das erhaltene produkt hat folgende Kennzahlen:

SZ 0,7
OHZ 184-185 gefunden
OHZ 190 berechnet.

II. Herstellung von Polyestercarbonaten

II.1 Herstellung eines Polyester-Polycarbonats mit folgenden Struktureinheiten

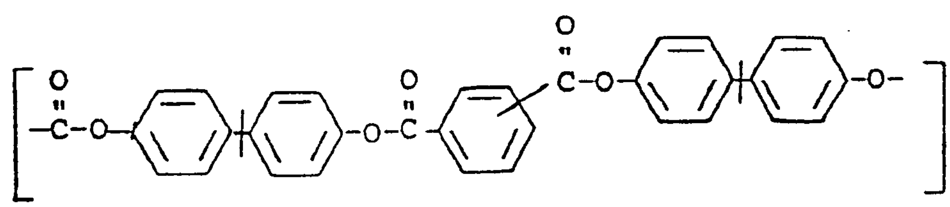

In einem Rührkessel werden 36 l destilliertes Wasser, 1049 g 45 %ige Natronlauge und 61,2 g p-tert.-Butylphenol gelöst. Dazu wird eine Lösung aus 25,2 l Methylenchlorid, 10,8 l Chlorbenzol und 4,780 kg des Gemisches des Beispiels I.7 gegeben. Innerhalb 40 Minuten werden unter Rühren und Stickstoffatmosphäre 1,612 kg Phosgen unter Rühren bei pH 13 eingeleitet, während gleichzeitig zur Konstanthaltung von pH 13 1,5 kg 45 %ige Natronlauge zugetropft werden. Danach werden 11,26 ml N-Ethylpiperidin (1 Mol-%) zugegeben und es

wird eine Stunde gerührt. Die organische Phase wird abgetrennt, nacheinander mit 2 %iger Phosphorsäure und schließlich mit dest. Wasser bis zur Elektrolytfreiheit gewaschen. Durch Abdestillieren des Methylenchlorid erhält man eine Chlorbenzollösung aus der das polymer in einem Ausdampfextruder bei 310°C Extrudertemperatur isoliert wird. Die rel. Viskosität des polyestercarbonats beträgt η rel = 1,265 (0,5 g in 100 ml $CH_2Cl_2$) (Mechanische Eigenschaften siehe nachfolgende Tabelle).

II.2 Herstellung eines Polyestercarbonats aus 30 Gew.-% aromatischem Polyester und 70 Gew.-% Bisphenol-A-polycarbonat

In einem Rührkessel werden 2,185 kg Bisphenol A, 72,4 g p-tert.-Butylphenol, 36 l destilliertes Wasser und 2,500 kg 45 %ige Natronlauge gelöst. Dazu wird eine Lösung aus 2,456 kg des Gemisches des Beispiels I.7, 10,8 l Chlorbenzol und 25,2 l Methylenchlorid gegeben. Unter Stickstoffatmosphäre werden in diese Reaktionsmischung bei pH 13 2,722 kg Phosgen bei 20-25° C eingeleitet, während gleichzeitig zur Konstanthaltung von pH 13 insgesamt 5,3 kg 45 %ige Natronlauge zugetropft werden.

Danach werden 19 ml N-Ethylpiperidin (1 Mol-%) zugegeben und es wird 1 Stunde gerührt. Das Reaktionsprodukt wird wie in Beispiel II.1 aufgearbeitet.

Das isolierte Polyesterpolycarbonat hat folgende Kennzahlen:

η rel = 1,290

(Mechanische Eigenschaften siehe nachfolgende Tabelle).

II.3 Herstellung eines polyestercarbonats aus 50 Mol-% aromatischem Polyester (75 Mol-% Terephthalsäure und 25 Mol-% Isophthalsäure) mit 50 Mol-% Bisphenol A-Polycarbonat

In einem Rührkessel werden 1049 g 45 %ige NaOH, 61,2 g p-tert.-Butylphenol und 36 l destilliertes Wasser gegeben. Dazu wird eine Lösung aus 4,780 kg des Gemisches des Beispiels I.8, 10.8 l Chlorbenzol und 25.2 l Methylenchlorid gegeben. Innerhalb 40 Minuten werden unter Rühren und Stickstoffatmosphäre 1,612 kg Phosgen unter Zugabe von 1,5 kg NaOH 45 %ig eingeleitet. Die weitere Aufarbeitung erfolgt wie Beispiel II.1. Die relative Viskosität des Polyestercarbonats beträgt η rel = 1,277. Mechanische Eigenschaften siehe nachfolgende Tabelle.

II.4 Herstellung eines Polyestercarbonats aus 30 Gew.-% aromatischen Polyesters (90 Mol-% Terephthalsäure und 10 Mol-% Isophthalsäure) und 70 Gew.-% Bisphenol A-Polycarbonat

In einem Rührkessel werden 2,185 kg Bisphenol A, 72,4 g p-tert.-Butylphenol, 36 l destilliertes Wasser und 2,5 kg 45 %ige NaOH gelöst. Dazu wird eine Lösung aus 2,456 kg des Gemisches des Beispiels I.9, 10,8 l Chlorbenzol und 25,2 l Methylenchlorid gegeben. In diese Reaktionsmischung werden unter Rühren 2,722 kg Phosgen eingeleitet und wie in den Beispielen II.1 und II.2 aufgearbeitet. Das isolierte Polyester-Polycarbonat besitzt folgende Kennzahlen:

η rel = 1,264

Mechanische Eigenschaften siehe nachfolgende Tabelle.

II.5 Herstellung eines Polyestercarbonats aus 1 Mol p-Hydroxybenzoesäure und 1 Mol Bisphenol A

In einen Rührkessel werden 2,133 kg 45 %ige Natronlauge, 179,9 g p-tert.-Butylphenol und 36 l destilliertes Wasser gegeben. Dazu wird eine Lösung aus 4370 g des p-Hydroxybenzoesäure-Bisphenol-A-esters aus Beispiel I.2 gelöst in 25,2 l Methylenchlorid und 10,8 g Chlorbenzol gegeben. Innerhalb 30 Min. werden unter Rühren und $N_2$-Atmosphäre 2,370 kg Phosgen bei pH 14 unter Zugabe von 5,2 kg 45 % NaOH eingeleitet. Anschließend werden 16,5 ml N-Ethylpiperidin zugegeben und danach noch 1 h gerührt. Die organische Phase wird wie in Beispiel II.1 aufgearbeitet. Die relative Viskosität des Polyestercarbonats beträgt η rel = 1,31. Das Produkt zeigt nach DTA-Analyse eine Einfriertemperatur Tg von 155°C.

Tabelle 1

| Beispiel | II.1 | II.3 | II.4 | II.2 |
|---|---|---|---|---|
| 1. | (50/50-) | (50/50-) | (70/30-) | (70/30-) |
| 2. | (50/50) | (75/25) | (90/10) | (50/50) |
| Eigenschaft: | | | | |
| Streckspannung MPa a) | 67 | 68 | 63 | 65 |
| Reißfestigkeit MPa a) | 58 | 59 | 58 | 56 |
| Reißdehnung % a) | 73 | 21 | 68 | 25 |
| Zug-E-Modul MPa b) | 2170 | 2190 | 2110 | 2160 |
| Schlagzähigkeit kJ/m² c) | n.gebr. | - | - | - |
| Kerbschlagzähigkeit c) kJ/m² | 10 | 9 | 15 | 14 |
| Vicat-B-Temperatur d) °C | 164 | 163 | 158 | 155 |
| Einfriertemperatur °C (gemessen nach Differentialthermoanalyse) | 171 | 171 | 161 | 156 |

Die Eigenschaften der vorstehenden Tabelle wurden gemessen nach:

1. Carbonat-Ester-Verhältnis
2. Terephthals.-Isophthalsäure-Verhältnis

a) DIN 53455
b) DIN 53457
c) DIN 53453
d) DIN VST/B/50

III. In der nachfolgenden Tabelle II werden die Polyestercarbonate II.2, II.3 und II.4 mit einem konventionellen Polyestercarbonat verglichen.

Das konventionelle Polyestercarbonat besteht aus einem Gemisch aus Terephthalsäure und Isophthalsäure mit einem Molverhältnis von 1:1 und Bisphenol A und wurde nach dem Phasengrenzflächenverfahren aus den Säurechloriden der Terephthalsäure und Isophthalsäure herstellt; es hat eine relative Lösungsviskosität η rel von 1,26. Es wurde abgemischt mit Bisphenol A-Polycarbonat (η rel: 1,28) mit Phenylendgruppen.

Die vier Polyestercarbonate wurden auf einem S 30-Reifenhäuserextruder bei 300°C $T_M$ mit 0,1 Gew.-% Kaliumperfluorbutansulfonat und 0,5 Gew.-% N-Methyltetrachlorphthalimid vermischt.

**Tabelle II**

| | A<br>Mischung aus<br>II.3<br>+ Flammschutz | B<br>Mischung aus<br>II.4<br>+ Flammschutz | C<br>Mischung aus<br>II.2<br>+ Flammschutz | D<br>Mischung aus 30 Gew.-% konventionellem Polyestercarbonat und 70 Gew.-% Bisphenol A-Polycarbonat und Flammschutz |
|---|---|---|---|---|
| UL Subj. 94 | | | | |
| 1,6 mm | V-O; Nachbrenn-zeit: 2 Sekunden | V-O;Nachbrenn-zeit: 3-4 Sekunden | V-O;Nachbrenn-zeit: 2 Sekunden | V-O;Nachbrennzeit 5 Sekunden |
| 0,8 mm | V-O;Nachbrenn-zeit: 2-3 Sekunden | V-O;Nachbrenn-zeit: 3 Sekunden | V-O;Nachbrenn-Zeit: 2 Sekunden | V-2 |

V-O: nicht abtropfend / Nachbrennzeit ist kleiner als 5 Sekunden

**Patentansprüche**

1. Verfahren zur Herstellung von Diphenolmonoestern von Carbonsäuren, dadurch gekennzeichnet, daß Carbonsäuren mit hochmolekularen Polycarbonaten unter Verwendung von Katalysatoren bei Temperaturen zwischen 150°C und 350°C unter Abspaltung von $CO_2$ zur Reaktion gebracht werden, wobei zur Herstellung der Diphenolmonoester pro Carbonsäuregruppe der eingesetzten Carbonsäure ein Diphenolpolycarbonat-Äquivalent eingesetzt wird.
2. Diphenolmonoester von Carbonsäuren, erhältlich nach dem Verfahren des Anspruchs 1.
3. Monocarbonsäure-(diphenol)-monoester gemäß Anspruch 2.
4. Dicarbonsäure-bis-(diphenol)-monoester gemäß Anspruch 2.
5. Tricarbonsäure-tris-(diphenol)-monoester gemäß Anspruch 2.
6. Tetracarbonsäure-tetra-(diphenol)-monoester gemäß Anspruch 2.
7. Verwendung der Diphenolmonoester von Carbonsäuren der Ansprüche 2-6 zur Herstellung von Polyestercarbonaten nach dem Phasengrenzflächenverfahren oder nach dem Pyridinverfahren.
8. Verfahren zur Herstellung von Polyestercarbonaten aus Diphenolen, Phosgen, gegebenenfalls Kettenabbrechern in den bekannten Mengen und gegebenenfalls Verzweigern in den bekannten Mengen nach dem bekannten Zweiphasengrenzflächenverfahren bei pH-Werten zwischen 9 und 14, bei Temperaturen zwischen 0°C und 80°C unter Verwendung der üblichen organischen Lösungsmittel und unter Verwendung der üblichen Polykondensationskatalysatoren, dadurch gekennzeichnet, daß als Diphenole Diphenolmonoester von Carbonsäuren mit zwei phenolischen OH-Gruppen, gegebenenfalls in Kombination mit estergruppenfreien Diphenolen HO-Z-OH, worin -Z- ein estergruppenfreier aromatischer zweibindiger Rest ist, gegebenenfalls unter Mitverwendung von Monocarbonsäure-(diphenol)-monoestern mit einer phenolischen OH-Gruppe als Kettenabbrecher und gegebenenfalls unter Mitverwendung von Diphenolmonoestern von Carbonsäuren mit drei oder mehr als drei phenolischen OH-Gruppen als Verzweiger eingesetzt werden, wobei die jeweils eingesetzten Diphenolmonoester von Carbonsäuren in der organischen Phase des Zweiphasengemisches vorab gelöst werden.
9. Polyestercarbonate, erhältlich nach dem Verfahren des Anspruchs 8.
10. Formmassen enthaltend die Polyestercarbonate des Anspruchs 8, Alkalisalze von Perfluoralkansulfonsäuren oder Arylsulfonsäuren in Mengen von 0,05-2 Gew.-%, bezogen auf das Gesamtgewicht der Formmasse, und gegebenenfalls N-Alkyltetrachlorphthalimide, Polyhalogendiphenyle, Polyhalogendiphenylether oder Oligocarbonate von Tetra-halogenbisphenol-A in Mengen von 0,3-5 Gew.-%, bezogen auf das Gesamtgewicht der Formmasse.

**Claims**

1. Process for the production of diphenol monoesters of carboxylic acids, characterised in that carboxylic acids are reacted with high molecular weight polycarbonates using catalysts at temperatures between 150°C and 350°C with the elimination of $CO_2$, one diphenol polycarbonate equivalent being employed per carboxylic acid group of the carboxylic acid used, for the production of the diphenol monoesters.
2. Diphenol monoesters of carboxylic acids, obtainable by the process of Claim 1.
3. Monocarboxylic acid (diphenol) monoesters according to Claim 2.
4. Dicarboxylic acid bis-(diphenol) monoesters according to Claim 2.
5. Tricarboxylic acid tris-(diphenol) monoesters according to Claim 2.
6. Tetracarboxylic acid tetra-(diphenol) monoesters according to Claim 2.
7. Use of the diphenol monoesters of carboxylic acids of Claims 2-6 for the production of polyester carbonates by the phase boundary process or by the pyridine process.
8. Process for the production of polyester carbonates from diphenols, phosgene, optionally chain stoppers in the known quantities and optionally branching agents in the known quantities by the known two phase boundary process at pH values between 9 and 14, at temperatures between 0°C and 80°C using the customary organic solvents and using the customary polycondensation catalysts, characterised in that the diphenols used are diphenol monoesters of carboxylic acids with two phenolic OH groups, optionally in combination with ester-group-free diphenols HO-Z-OH, wherein -Z- is an ester-group-free aromatic divalent radical, optionally also using monocarboxylic acid (diphenol) monoesters with one phenolic OH group as chain stoppers and optionally also using diphenol monoesters of carboxylic acids with three or more than three phenolic OH groups as branching agents, the diphenol monoesters of carboxylic acids used in each case being first dissolved in the organic phase of the two phase mixture.
9. Polyester carbonates, obtanable by the process of Claim 8.
10. Moulding compositions containing the polyester carbonates of Claim 8, alkali metal salts of perfluoroalkanesulphonic acids or arylsulphonic acids in quantities of 0.05-2% by weight, based on the total weight of the moulding composition, and optionally N-alkyltetrachlorophthalimides, polyhalogenodiphenyls, polyhalogenodiphenyl ethers or oligocarbonates of tetra-halogenobisphenol A in quantities of 0.3-5% by weight, based on the total weight of the moulding composition.

**Revendications**

1. Procédé de production de monoesters de diphénols d'acides carboxyliques, caractérisé en ce qu'on met en réaction des acides carboxyliques avec des polycarbonates de haut poids moléculaire en utilisant des catalyseurs à des températures comprises entre 150°C et 350°C avec élimination de $CO_2$, en utilisant pour la préparation des monoesters de diphénols, par groupe acide carboxylique de l'acide carboxylique utilisé, un équivalent de polycarbonate de diphénol.

2. Monoesters de diphénols d'acides carboxyliques, pouvant être obtenus par le procédé suivant la revendication 1.

3. Un monoester de diphénol d'acide monocarboxylique suivant la revendication 2.

4. Un monoester de bis-(diphénol) d'acide dicarboxylique suivant la revendication 2.

5. Un monoester de tris-(diphénol) d'acide tricarboxylique suivant la revendication 2.

6. Un monoester de tétra-(diphénol) d'acide tétracarboxylique suivant la revendication 2.

7. Utilisation des monoesters de diphénols d'acides carboxyliques des revendications 2 à 6 pour la production de carbonates de polyesters par le procédé à l'interface entre phases ou par le procédé à la pyridine.

8. Procédé de production de polyestercarbonates à partir de diphénols, de phosgène, le cas échéant d'agents de terminaison de chaîne en les quantités connues et, le cas échéant, d'agents de ramification en les quantités connues selon le procédé connu à l'interface entre deux phases à des valeurs de pH comprises entre 9 et 14, à des températures comprises entre 0°C et 80°C en utilisant les solvants organiques classiques et en utilisant les catalyseurs classiques de polycondensation, caractérisé en ce qu'on utilise comme diphénols des monoesters de diphénols d'acides carboxyliques portant deux groupes OH phénoliques, éventuellement en association avec des diphénols HO-Z-OH dépourvus de groupes ester, dans lesquels -Z- est un reste aromatique divalent dépourvu de groupes ester, en utilisant éventuellement des monoesters de diphénols d'acides monocarboxyliques portant un groupe OH M phénolique comme agents de terminaison de chaîne et en utilisant le cas échéant des monoesters de diphénols d'acides carboxyliques portant trois ou plus de trois groupes OH phénoliques comme agents de ramification, les monoesters de diphénols d'acides carboxyliques utilisés dans chaque cas étant préalablement dissous dans la phase organique du mélange de deux phases.

9. Polyestercarbonates pouvant être obtenus par le procédé de la revendication 8.

10. Mélanges à mouler contenant les polyestercarbonates de la revendication 8, des sels alcalins d'acides perfluoralcane - sulfoniques ou d'acides arylsulfoniques en quantités de 0,05 à 2% en poids par rapport au poids total du mélange à mouler, et le cas échéant des N-alkyltétrachlorophtalimides, des polyhalogénodiphényles, des polyhalogénodiphényléthers ou des oligocarbonates de tétrahalogénobisphénol A en quantités de 0,3 à 5% en poids par rapport au poids total du mélange à mouler.